# EUROPEAN PATENT APPLICATION

(11) **EP 0 987 570 A1**
(43) Date of publication of application: **22.03.2000**
(21) Application number: 99118372.4
(22) Date of filing: 16.09.1999
(51) Int. Cl.: G02B 6/25

(54) **Process for cutting an optical fiber**

(30) Priority: 18.09.1998 EP 98117698
(71) Applicant: THE WHITAKER CORPORATION, Wilmington, DE 19808 (US)
(72) Inventor: Vergeest, Henricus Jozef, 5213 XH s-Hertogenbosch (NL)
(74) Representative: Heinz-Schäfer, Marion

(57) **Abstract**

A process for cutting or splitting at least one optical fiber (3) at a predetermined angle, wherein the fiber (3) is introduced into a holding and positioning device (7) and is cut by a pulsed laser beam (Lₛ).

## Description

The invention relates to a process for cutting at least one optical fiber at a predetermined angle, wherein the fiber is introduced into a holding and positioning device.

Optical fibers made of glass are often used in optical transmission systems and other optical systems. The machining of the end face of these fibers plays a crucial role during the use of these monomode or multimode fibers. It is important that the end faces have a particularly uniform surface so that the transition from one fiber end to another or to an active element can be carried out with damping values which are as low as possible. It is also important that the end faces of the fibers can be produced at predetermined angles and that these angles are reliable and reproducible.

Various mechanical processes are currently known for severing optical fibers. With all processes, the fiber is essentially fixed in a holding device consisting of two holders which are then mutually offset, for example, so that the correct angle is ensured during the cutting operation. Diamond cutters, for example, are used. It is also known to twist the fiber or begin to cut and then break the fibers which are to be cut. All these processes are expensive. In addition, they are also applicable to the parallel fibers of a ribbon cable only under certain conditions.

It is known from EP 531 225 that in order to sever an optical fiber, the optical fiber may be fixed between two carriers of a holding and positioning device, then one of the carriers is offset perpendicularly to the optical axis of the fibers and a cutting blade is used to cut the fibers at a desired angle. This process can also be used for the number of fibers in a ribbon cable which are arranged parallel to one another.

It is an object of the invention to provide a process for cutting at least one optical fiber with a high degree of accuracy relative the cutting angle that is produced.

The object is achieved by a process having the steps of one of claims 1 or 2. The sub-claims provide advantageous developments.

With the process according to the invention for the cutting of at least one optical fiber at a predetermined angle, the fiber is introduced into a holding and positioning device and the fiber is then cut by means of a laser which delivers short, high-power pulses. As a result, a fiber end face can be produced at a predetermined angle with a high reliability with respect to the angle desired, while the fiber end face that results is very uniform such that additional machining of the fiber end face is unnecessary.

It is also particularly advantageous that only a minimal quantity of glass is melted during the cutting of the fiber. The holding and positioning device is designed so that the fiber is fastened therein, the device is adjustable at predetermined angles relative the laser beam, and the fiber can be moved through the laser beam when the laser beam is activated. A CO₂ laser, for example, can be used. CO₂ lasers have proven particularly advantageous owing to the high speed at which they can operate and the resultant cost effectiveness. The fiber material is removed by ablation by the CO₂ laser during the cutting process. The glass is not melted in the process, but sublimated. It is also possible to use excimer lasers.

The CO₂ laser is operated in a pulsed mode for cutting the fiber. The pulse energy is very high. The pulses are very short and have very steep edges, in other words the maximum pulse energy is achieved very rapidly. The peak power of the pulse is between 0.1 and 1000 watts, the pulse length being > 50 fs. Very good results are achieved with a CO₂ laser (wavelength 10.6 µm) having a pulse length of 35 µs and a peak power of 600 watts. Other lasers with wavelengths between 0.1 and 1.5 µm and 8.5 µm to 10 µm can basically also be used.

Whereas former mechanical systems have typical angle tolerances of +/- 0.5µ, angle tolerances of less than 0.2µ can be achieved with the process according to the invention. With the present process it is possible to cut not only individual fibers at an angle, but also fibers of a ribbon cable.

An embodiment of the invention will now be described with reference to the figures:
Fig. 1 is a schematic view of an optical waveguide with a coordinate system and a laser beam;
Fig. 2 is a cross section through one end of an optical waveguide; and
Fig. 3 is a schematic view of optical waveguides of a ribbon cable which are fastened in a holding and positioning device.

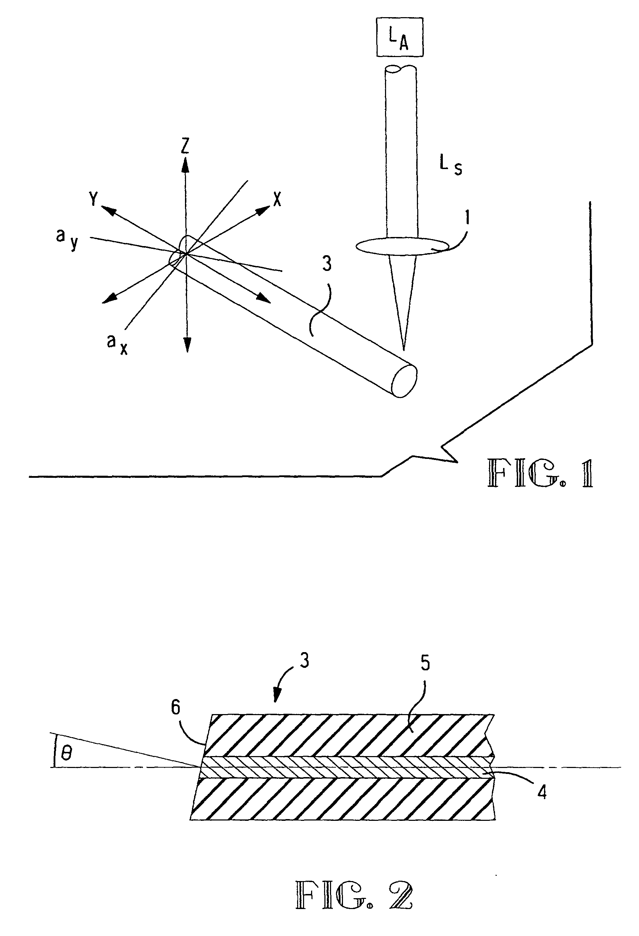

A laser L_{A} from which a laser beam L_{S} issues is initially required for carrying out the process of cutting a fiber 3. The laser beam L_{S} is concentrated by a lens 1. The laser beam L_{S}, once concentrated in this way, impinges on the optical fiber 3. The optical fiber 3 is a glass fiber, for example a monomode or multimode fiber. As shown in Fig. 2, the fiber 3 consists of a fiber core 4 and a fiber sheath 5 so that the light is guided substantially in the fiber core 4. The fiber 3 is arranged in a holding and positioning device and is orientatable relative to the laser L_{A}. For example, it can be orientated along the axis a_{Y} and then be moved along the axis X relative to the laser beam L_{S}. However, it is also possible for the fiber 3 to be moved along the axis a_{X}. A surface 6 of the fiber 3 is produced at an inclination angle to the fiber axis, as shown in Fig. 2. The angle of inclination should be accurately reproducible, and this is achieved by the proposed process. For carrying out the process, the laser transmits short high-energy pulses of laser light, so that the material of the fiber is sublimated.

A very accurate and high quality surface of the fiber is achieved by "laser cutting", so additional machining of the fiber surface after cutting, as is normal with mechanical cutting processes, is no longer necessary. The fiber end face 6 is finished sufficiently after cutting with the laser.

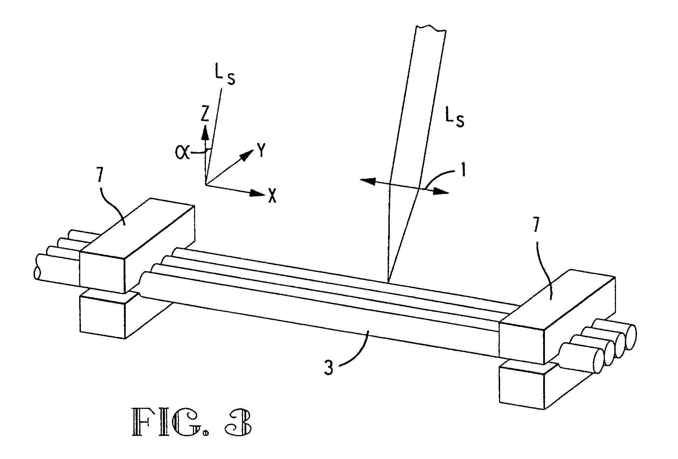

As shown in Fig. 3, with the process according to the invention, it is possible not only to cut an individual fiber and adequately finish the end surface at the same time, but it is also possible to cut a bundle of fibers 3 orientated parallel to one another, for example a ribbon cable, simultaneously with the same surface qualities. For this purpose, the fibers 3 that make up a bundle (ribbon cable) are introduced into a positioning device 7. The positioning device 7 ensures that the fibers 3 are arranged parallel to one another. The longitudinal axis of the fibers 3 coincides, for example, with the X-axis of a coordinate system. The positioning device 7 can now be driven along the direction of the Y-axis in a manner that ensures that the fibers 3 remain in parallel orientation. A laser beam L_{S}, of which the direction is inclined by an angle α to the Z-axis, is concentrated onto the fibers 3 by means of a lens 1 and operated in a mode with short high-energy pulses described above. The fibers 3 pass through the laser beam L_{S} and are thus cut and the end faces simultaneously finished.

Advantageously, this process ensures that all fibers of the ribbon cable are cut at the same angle with an equally high end face quality.

## Claims

1. A process for cutting at least one optical fiber at a predetermined angle, the process comprising the steps of:
- introducing the fiber (3) into a holding and positioning device (7);
- orienting the fiber (3) at a desired predetermined angle relative a laser beam;
- actuating a laser device to deliver the beam (Lₛ) in short high-power pulses; and - moving the beam (Lₛ) across the fiber (3).

2. A process for cutting at least one optical fiber at a predetermined angle, the process comprising the steps of:
- introducing the fiber (3) into a holding and positioning device (7);
- orienting the fiber (3) at a desired predetermined angle relative a laser beam;
- actuating a laser device to deliver the beam (Lₛ) in short high-power pulses; and
- moving the fiber (3) through the beam (Lₛ).

3. The process according to claim 1 or 2 wherein a plurality of fibers are introduced into the holding and positioning device parallel to one another and moving the beam across the plurality so that the fibers are cut in succession.

4. The process according to claim 1 or 2 wherein the fiber is a ribbon fiber having multiple fibers therein.

5. The process according to claim 1 or 2 wherein the laser is a CO₂ laser.

6. The process according to claim 5, wherein the laser device delivers pulses with peak power between 0.1 and 1000 watts and the pulse length is greater than 50 fs.

7. The process according to claim 5, wherein the laser device delivers pulses at a wavelength of 10,6 µm having a peak power of 600 watts and a pulse length of 35 µs.
